# EUROPEAN PATENT SPECIFICATION

(11) **EP 3 091 211 B1**
(45) Date of publication and mention of the grant of the patent: **04.07.2018**
(21) Application number: 16168526.8
(22) Date of filing: 05.05.2016
(51) Int. Cl.: F02C 7/052, B64D 33/02

(54) **AIRCRAFT WITH AN ENGINE PROVIDED WITH A FILTER FOR THE INTAKE AIR**
LUFTFAHRZEUG MIT MOTOR MIT EINEM FILTER FÜR DIE ANSAUGLUFT
AÉRONEF AVEC UN MOTEUR POURVU D'UN FILTRE POUR L'AIR D'ADMISSION

(30) Priority: 05.05.2015 IT BO20150232
(43) Date of publication of application: 09.11.2016
(73) Proprietor: BMC S.R.L., 40059 Medicina (IT)
(72) Inventor: BERGAMI, Gaetano, 40059 MEDICINA (IT)
(74) Representative: Maccagnan, Matteo

(56) References cited:
- US-A- 2 405 102
- US-A- 2 407 194
- US-A- 2 623 610
- US-A- 2 944 631

## Description

### TECHNICAL FIELD

The present invention relates to an aircraft, namely to a machine that supports itself and can move in the air, thus allowing the transport of persons or things in the terrestrial atmosphere.

The present invention finds an advantageous application in a helicopter, to which the following description will make explicit reference without thereby losing generality.

### PRIOR ART

A modern helicopter is generally equipped with at least one turbine engine, which drives a set of blades enabling the helicopter to rise and fall vertically, remain stationary in flight, move sideways, backwards or forwards. The turbine engine has a front air intake, through which the turbine engine takes in the outside air needed to operate (i.e. the outside air containing the oxygen necessary for combustion).

Generally, the air intake can comprise a relatively large-meshed metal grid (of the order of magnitude of one or two centimetres), whose function is preventing the entrance of birds. More rarely, an air filter is arranged between the air intake and the propulsion turbine. Its function is filtering the intake air to hold small-sized impurities (dust or the like) which, in the long run, can cause an early wear of the turbine engine. The use of the air filter is generally avoided, since the air filter causes load losses having a significant negative impact on the performance of the turbine engine, and is useful only when the aircraft is close to the ground. In fact, the impurities tend to fall down by gravity, and therefore may be present only in the air near the ground, while at high altitude (for example over 50-70 meters from the ground) the air is completely free of impurities. As a result, the air filter is mounted only when the helicopter must operate (in particular, take off or land) in very dusty areas, such as desert areas.

The patent US2407194A describes an aircraft having: an engine; a housing having an air inlet opening, through which the engine takes in the outside air needed to operate; an air filter that is arranged in the housing at the air inlet opening and is movably mounted to move between an operating position, where the air taken in by the engine passes through the air filter, and a rest position, where the air taken in by the engine does not pass through the air filter; and an actuator moving the air filter between the operating position and the rest position. In particular, the air filter is hinged at an outer edge to rotate about an axis of rotation between the operating position and the rest position (in other words, the axis of rotation passes through the outer edge of the air filter).

However, the aircraft embodiment described in the patent US2407194A has several drawbacks, because the movement of the air filter requires a complex, bulky and heavy mechanism, and because the housing must be enlarged (with a consequent greater aerodynamic resistance) to create inside it the space necessary for housing the air filter in the rest position.

### DESCRIPTION OF INVENTION

The object of the present invention is to provide an aircraft that can safely operate in very dusty areas without penalizing, at the same time, the engine performance.

According to the present invention, it is provided an aircraft as claimed by the appended claims.

### BRIEF DESCRIPTION OF THE DRAWINGS

The present invention will now be described with reference to the accompanying drawings showing some examples of nonlimiting embodiments, in which:
- Figure 1 is a perspective and schematic view of a helicopter manufactured according to the present invention;
- Figures 2 and 3 are two schematic, cross-section views of a turbine engine of the helicopter of Figure 1 with an air filter, respectively in an operating position and in a rest position; and
- Figures 4-11 are schematic, cross-section views of alternative embodiments of the turbine engine of Figures 2 and 3 that are not part of the present invention.

### PREFERRED EMBODIMENTS OF THE INVENTION

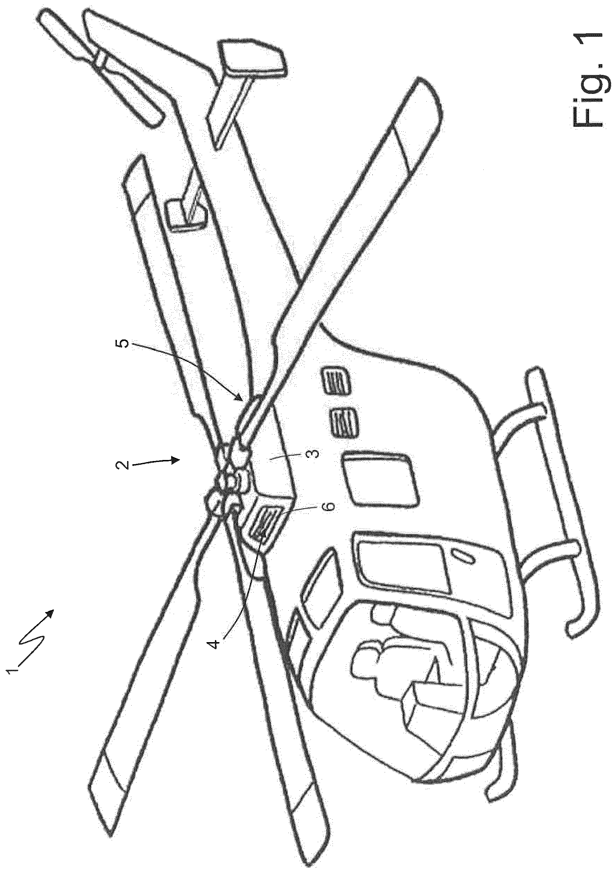

In Figure 1, number 1 indicates as a whole a helicopter comprising a turbine engine 2, which drives a set of blades enabling the helicopter to rise and fall vertically, remain stationary in flight, move sideways, backwards or forward. The turbine engine 2 comprises a tubular housing 3 having a front air inlet opening 4 (through which the turbine engine 2 takes in the outside air needed to operate, or the outside air containing the oxygen necessary for combustion) and a rear air outlet opening 5 (through which the turbine engine 2 expels the exhaust gases produced by the combustion) . At the opening 4 it is arranged a relatively large-meshed metal grid (of the order of magnitude of one or two centimetres), whose function is preventing the entrance of birds.

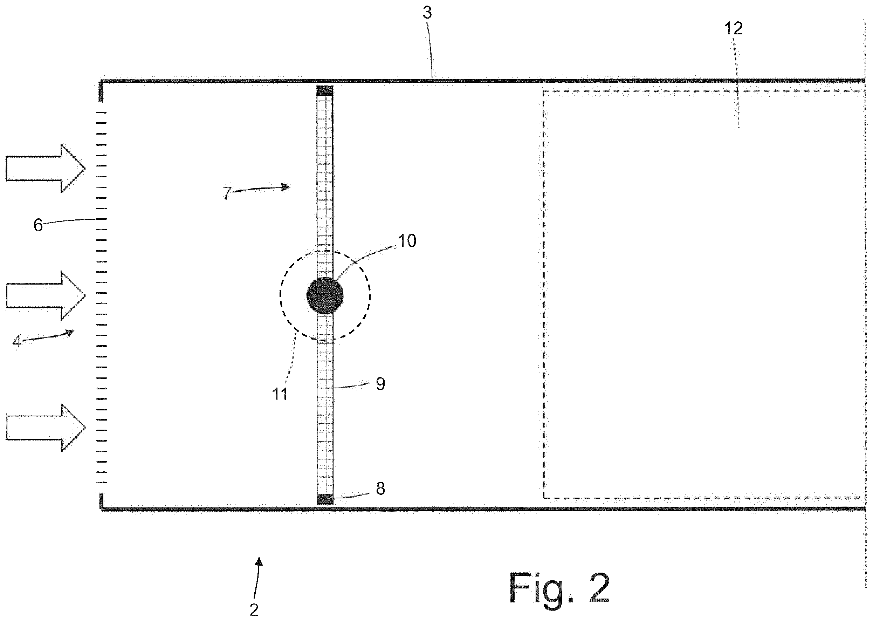

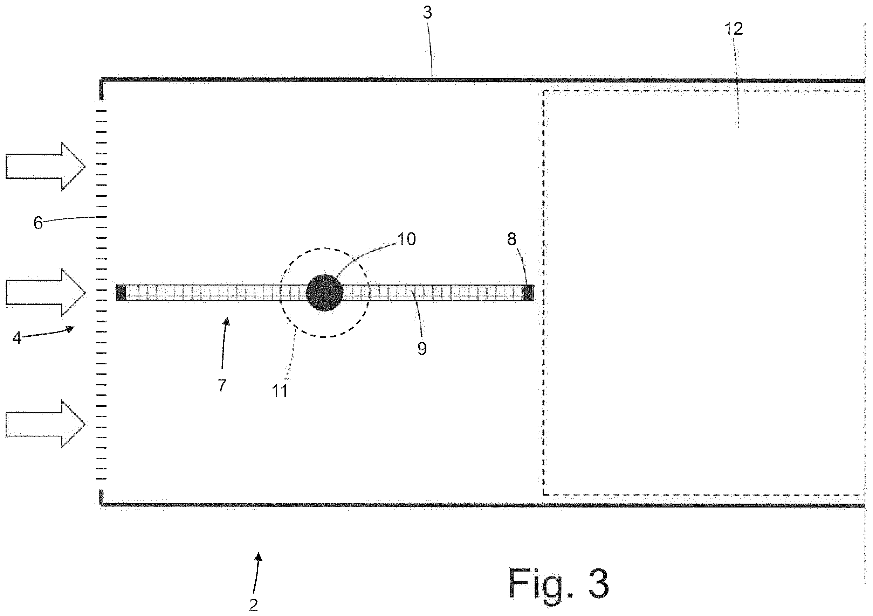

As shown in Figure 2, the tubular housing 3 houses an air filter 7, which comprises a peripheral frame 8 (made of aluminium, plastic or a composite material) supporting a filtering material panel 9 (e.g. made of fabric or nonwoven fabric of cotton or other fibres enclosed between two layers of thin metallic net conferring shape and strength to the filtering material). The peripheral frame 8 of the air filter 7 is provided with a shaft 10 that is hinged to the walls of the tubular housing 3 to rotate about an axis of rotation under the control of an actuator 11 (e.g. of the electric or of the hydraulic type). The air filter 7 can have a circular, rectangular or elliptical shape depending on the shape of the tubular housing 2, namely depending on the duct where the air filter 7 is arranged. The moving parts 12 of the turbine engine 2, where the fuel combustion takes place using the intake air as comburent, are arranged immediately downstream of the air filter 7. Thanks to the actuator 11, the air filter 7 is movable between an operating position (shown in Figure 2), where the air filter 7 completely closes the internal cavity of the tubular element 3 so that the intake air must pass through the air filter 7, and a rest position (shown in Figure 3), where the air filter 7 leaves substantially free the inner cavity of the tubular housing 3 so that the intake air must not pass through the air filter 7. In other words, when the air filter 7 is in the operating position (shown in Figure 2), the intake air passes through the air filter 7; then any impurities present in the air are blocked by the air filter 7, but the passage through the air filter 7 determines a load loss in the intake air which penalizes the performance of the turbine engine 2. On the other hand, when the air filter 7 is in the rest position (shown in Figure 3), the intake air does not pass through the air filter 7, and then any impurities present in the air are not blocked by the air filter 7; so there is no load loss in the intake air, but any impurities present in the air are not blocked by the air filter 7.

When the helicopter 1 is close to the ground (during take-off or landing, or when stationed at low altitude), it is possible (likely) that the intake air contains impurities, and thus the air filter 7 is disposed and kept in the operating position (shown in Figure 2) to filter the intake air, whereas, when the helicopter 1 is at high altitude (namely, away from the ground, e.g. at a height of several tens of metres), it is very unlikely that the intake air contains impurities, and then the air filter 7 is disposed and kept in the rest position (shown in Figure 3) not to (unnecessarily) penalize the performance of the turbine engine 2.

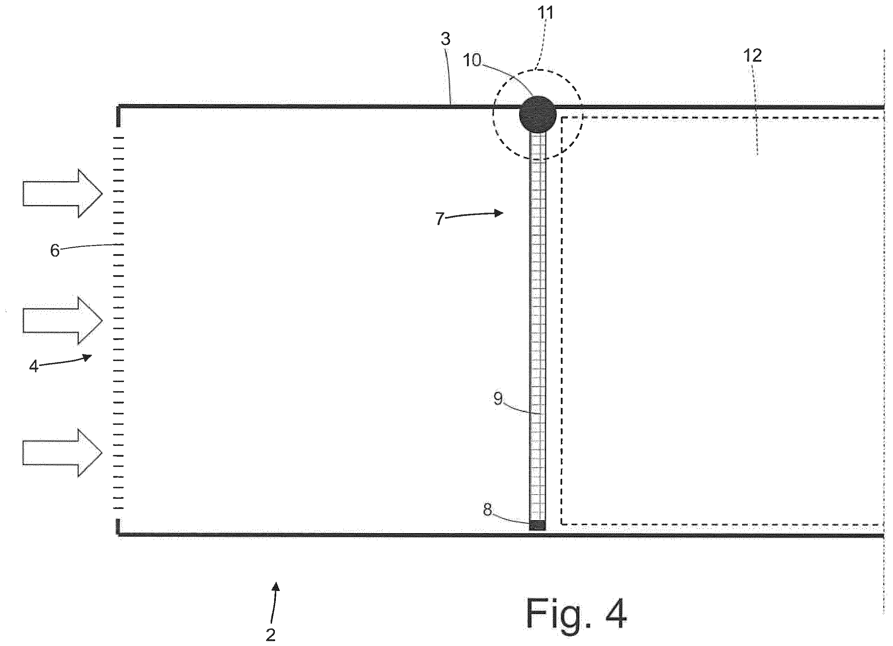

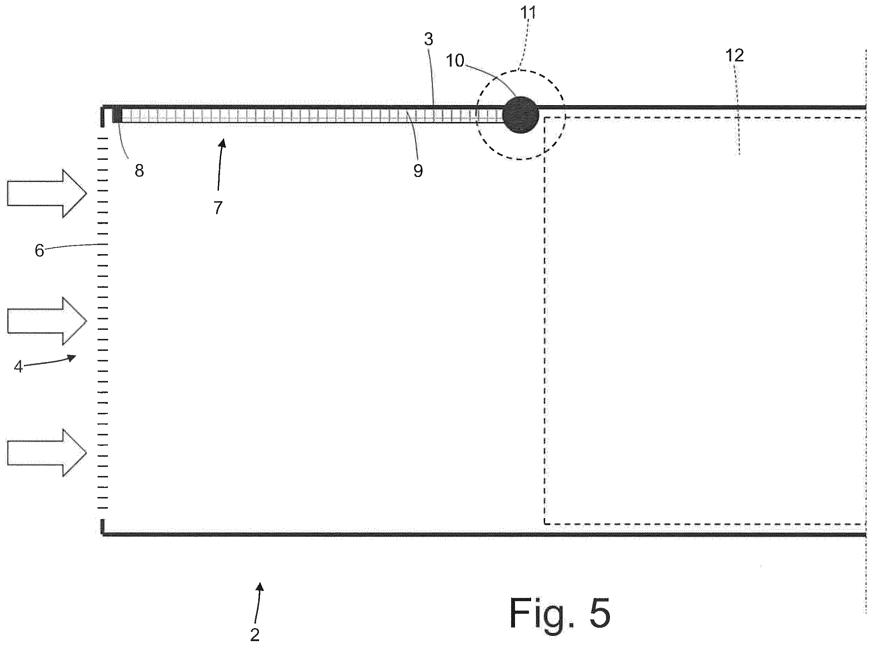

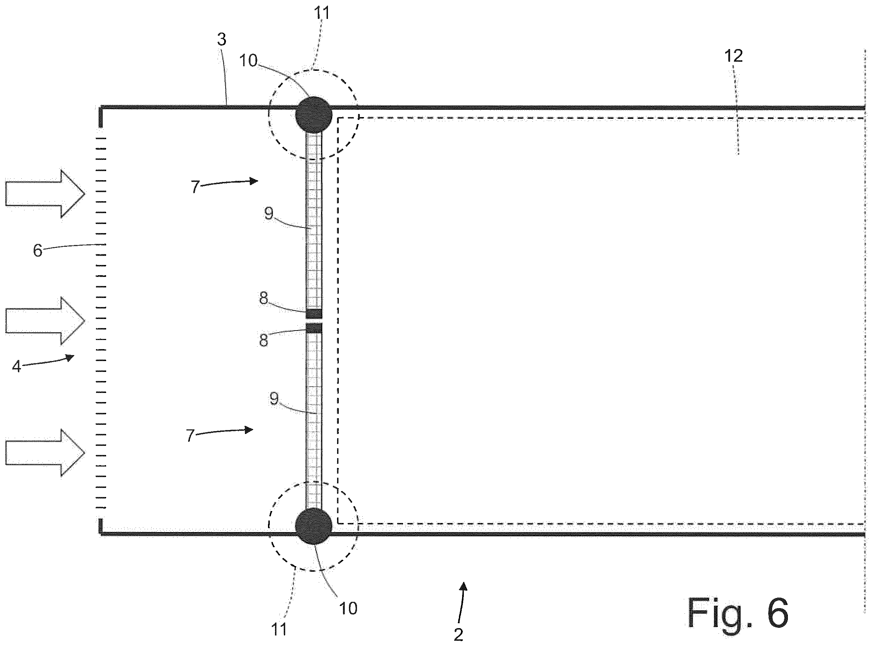

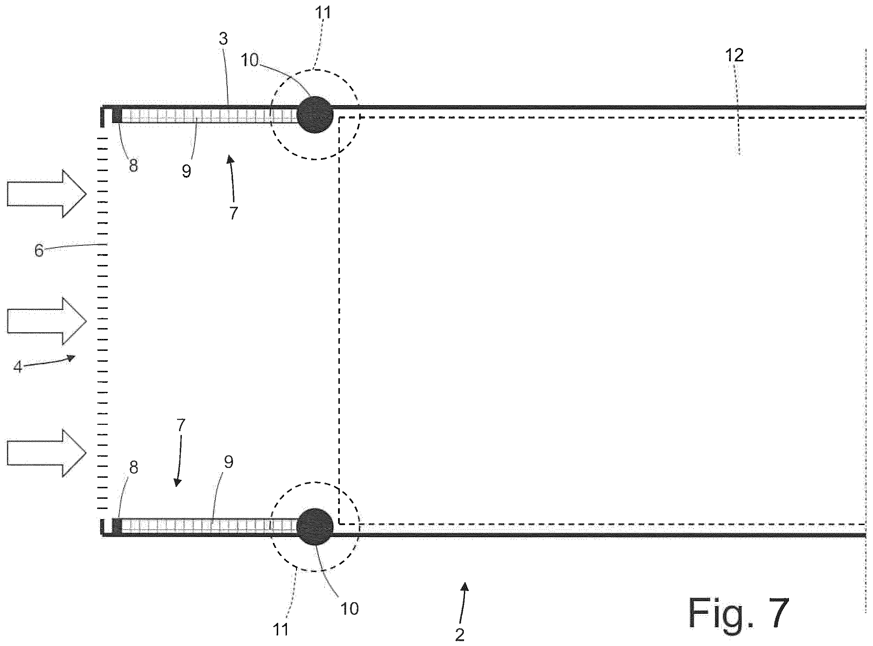

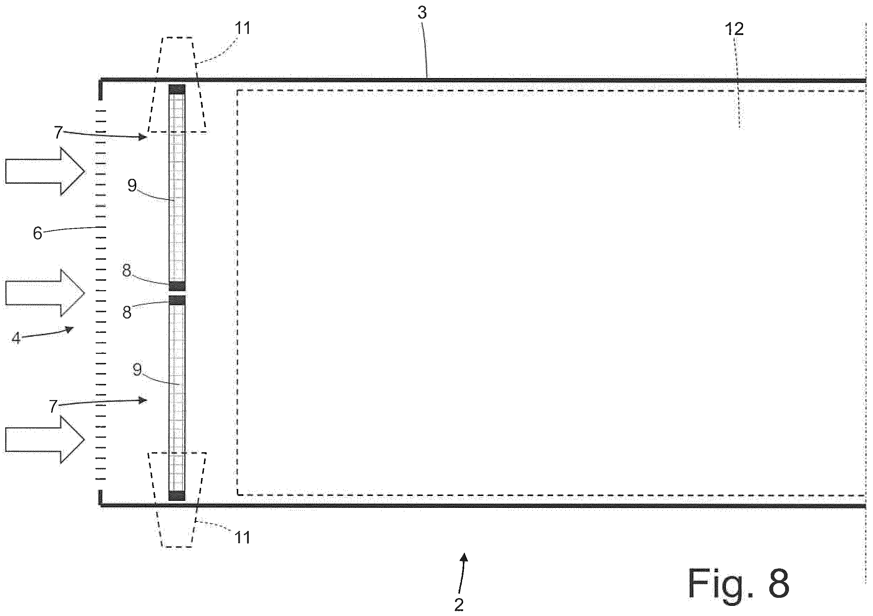

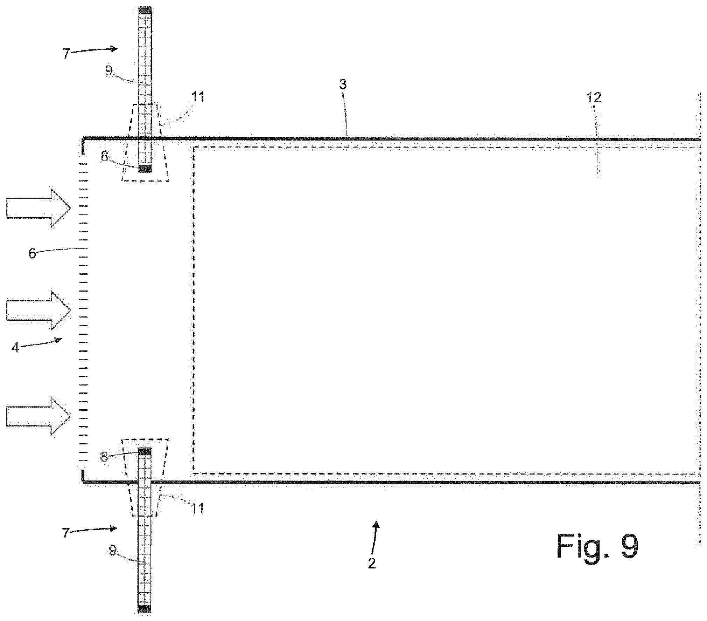

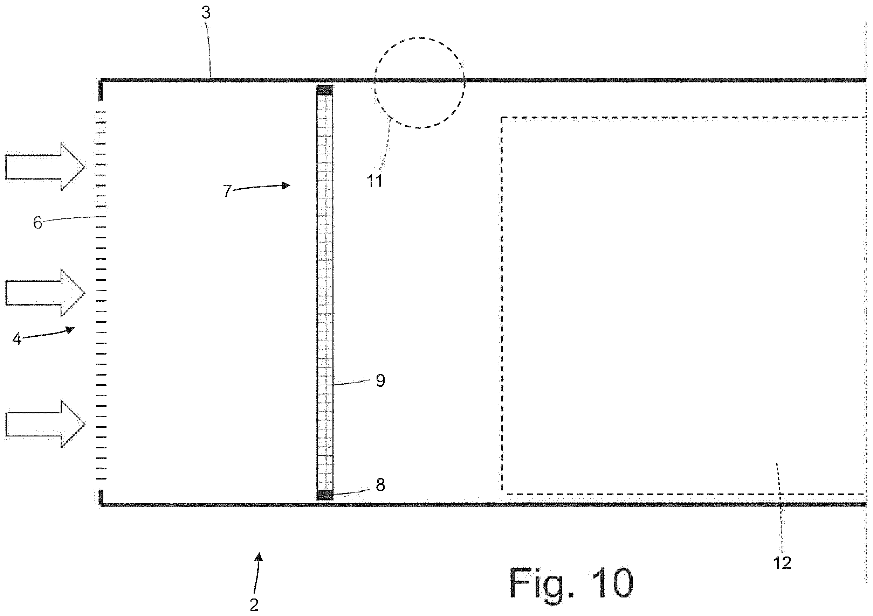

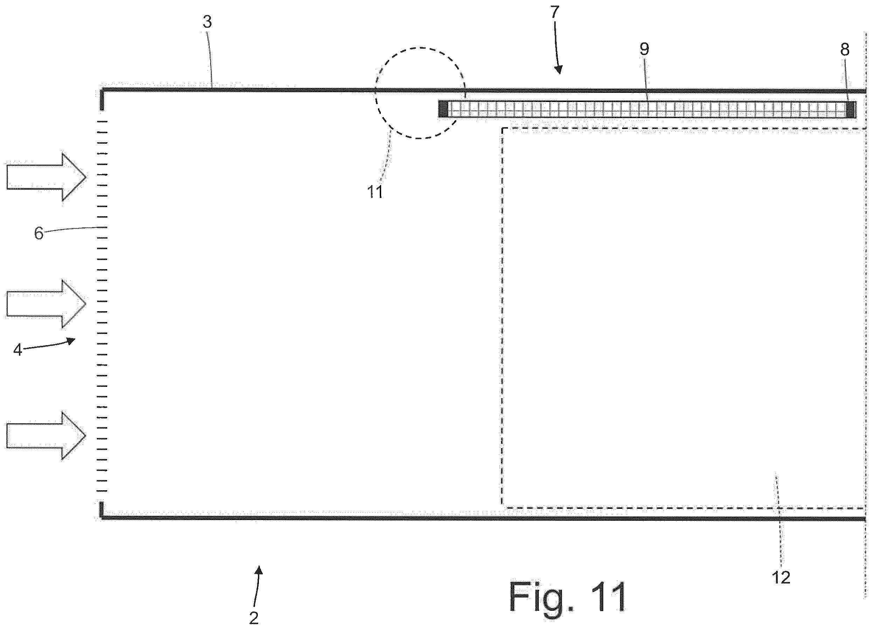

The embodiment shown in Figures 2 and 3 provides a single air filter 7, centrally hinged (namely at a central part), so that the axis of rotation passes through the centre of the air filter 7. The alternative embodiment shown in Figures 4 and 5 (which is not part of the present invention) provides a single air filter 7 laterally hinged (namely at an edge), so that the axis of rotation passes through the outer edge of the air filter 7. The alternative embodiment shown in Figures 6 and 7 (which is not part of the present invention) provides two twin air filters 7 laterally hinged (namely at the outer edges). The two twin air filters 7 are arranged side by side, in mutual contact in the operating position (shown in Figure 6) and are mutually spaced in the rest position (shown in Figure 7). The alternative embodiment shown in Figures 8 and 9 (which is not part of the present invention) provides two twin air filters 7 that are slidably mounted for translating (instead of rotating) between the operating position (shown in Figure 8) and the rest position (shown in Figure 9); the two twin air filters 7 are arranged side by side in mutual contact in the operating position (shown in Figure 8) and are mutually spaced in the rest position (shown in Figure 9). According to another embodiment not shown, it is provided a single air filter 7 which is slidably mounted for translating (instead of rotating) between the operating position and the rest position. According to another embodiment shown in Figures 10 and 11 (which is not part of the present invention), the air filter 7 (or the air filters 7) rototranslates by moving between the operating position (shown in Figure 10) and the rest position (shown in Figure 11).

The embodiment shown by way of example in the Figures relates to a helicopter 1, but the present invention may find advantageous application in any type of aircraft, therefore in a plane as well.

The aforesaid aircraft 1 has numerous advantages.

First, the aforesaid aircraft 1 can safely operate in very dusty areas (so in areas where the air close to the ground is rich in impurities, raised by the natural wind and by an air flow generated by the propulsion of the aircraft 1) thanks to the presence of the air filter 7 (or of the air filters 7) that is suitably arranged in the operating position for filtering the air taken in by the engine 2. Moreover, the engine 2 of the aforesaid aircraft 1 can operate for most of the flight without penalizing its performance, because when the aircraft 1 is at high altitude (namely, relatively far from the ground) the air filter 7 (or the air filters 7) is in the rest position. The central hinging of the air filter 7 simplifies (and therefore lightens) the mechanism handling the air filter 7, and, at the same time, does not require any oversized tubular housing 3 to keep the air filter 7 in the rest position (in fact, in the rest position it is "*flat*" in the middle of the tubular housing 3).

Finally, the aforesaid aircraft 1 is easy and economical to manufacture, since the handling of the air filter 7 (or of the air filters 7) can be carried out in a simple way and with components available on the market.

## Claims

1. An aircraft (1) comprising:
an engine (2);
a housing (3) having an air inlet opening (4), through which the engine (2) takes in the external air needed to operate;
at least an air filter (7), which is arranged in the housing (3) in the area of the air inlet opening (4) and is movable, so as to move between an operating position, where the air taken in by the engine (2) flows through the air filter (7), and a rest position, where the air taken in by the engine (2) does not flow through the air filter (7); and
an actuator (11), which moves the air filter (7) between the operating position and the rest position;
wherein the air filter (7) is hinged to rotate about an axis of rotation between the operating position and the rest position;
the aircraft (1) being **characterized in that** the air filter (7) is hinged at a central part, so that the axis of rotation passes through the centre of the air filter (7).

2. An aircraft (1) according to claim 1, wherein the air filter (7) comprises a peripheral frame (8), which supports a filtering material panel (9) and is hinged to the housing (3) to rotate about the axis of rotation relative to the housing (3).

3. An aircraft (1) according to claim 2, wherein the peripheral frame (8) of the air filter (7) is provided with a shaft (10), which is hinged to the walls of the housing (3) to rotate about the rotation axis.

4. An aircraft (1) according to any of the claims 1, 2 or 3 and comprising a large-meshed metal grid (6), which is arranged at the inlet opening (4), upstream of the air filter (7).

## Patentansprüche

1. Luftfahrzeug (1), umfassend:
ein Triebwerk (2);
ein Gehäuse (3) mit einer Lufteinlassöffnung (4), durch die das Triebwerk (2) die für den Betrieb benötigte Außenluft ansaugt;
zumindest einen Luftfilter (7), der in dem Gehäuse (3) im Bereich der Lufteintrittsöffnung (4) angeordnet ist und dahingehend bewegbar ist, um sich zwischen einer Betriebsposition, in der die von dem Triebwerk (2) angesaugte Luft durch den Luftfilter (7) strömt, und einer Ruheposition zu bewegen, in der die von dem Triebwerk (2) angesaugte Luft nicht durch den Luftfilter (7) strömt; und
einen Aktor (11), der den Luftfilter (7) zwischen der Betriebsposition und der Ruheposition bewegt;
wobei der Luftfilter (7) angelenkt ist, um sich um eine Drehachse zwischen der Betriebsposition und der Ruheposition zu drehen;
wobei das Luftfahrzeug (1) **dadurch gekennzeichnet ist, dass** der Luftfilter (7) an einem zentralen Teil angelenkt ist, so dass die Drehachse durch die Mitte des Luftfilters (7) verläuft.

2. Luftfahrzeug (1) nach Anspruch 1, wobei der Luftfilter (7) einen Umfangsrahmen (8) aufweist, der eine Filtermaterialplatte (9) stützt bzw. trägt und an dem Gehäuse (3) angelenkt ist, um sich um die Drehachse relativ zu dem Gehäuse (3) zu drehen.

3. Luftfahrzeug (1) nach Anspruch 2, wobei der Umfangsrahmen (8) des Luftfilters (7) mit einer Welle (10) versehen ist, die an den Wänden des Gehäuses (3) angelenkt ist, um sich um die Drehachse zu drehen.

4. Luftfahrzeug (1) nach einem der Ansprüche 1, 2 oder 3, und umfassend ein grobmaschiges Metallgitter (6), das an der Einlassöffnung (4) stromaufwärts des Luftfilters (7) angeordnet ist.

## Revendications

1. Aéronef (1) comprenant :
un moteur (2) ;
un logement (3) ayant une ouverture d'entrée d'air (4), à travers laquelle le moteur (2) prélève l'air externe nécessaire pour fonctionner ;
au moins un filtre à air (7), qui est agencé dans le logement (3) dans la zone de l'ouverture d'entrée d'air (4) et est mobile, de façon à se déplacer entre une position de fonctionnement, où l'air prélevé par le moteur (2) circule à travers le filtre à air (7), et une position de repos, où l'air prélevé par le moteur (2) ne circule pas à travers le filtre à air (7) ; et
un actionneur (11), qui déplace le filtre à air (7) entre la position de fonctionnement et la position de repos ;
dans lequel le filtre à air (7) est articulé pour tourner autour d'un axe de rotation entre la position de fonctionnement et la position de repos ;
l'aéronef (1) étant **caractérisé en ce que** le filtre à air (7) est articulé au niveau d'une partie centrale, de sorte que l'axe de rotation passe à travers le centre du filtre à air (7).

2. Aéronef (1) selon la revendication 1, dans lequel le filtre à air (7) comprend un cadre périphérique (8), qui supporte un panneau de matériau filtrant (9) et est articulé sur le logement (3) pour tourner autour de l'axe de rotation par rapport au logement (3).

3. Aéronef (1) selon la revendication 2, dans lequel le cadre périphérique (8) du filtre à air (7) est pourvu d'une tige (10), qui est articulée sur les parois du logement (3) pour tourner autour de l'axe de rotation.

4. Aéronef (1) selon l'une quelconque des revendications 1, 2 ou 3 et comprenant une grille en métal à larges mailles (6), qui est agencée au niveau de l'ouverture d'entrée (4), en amont du filtre à air (7).
